# EUROPÄISCHE PATENTANMELDUNG

(11) **EP 0 569 774 A1**
(43) Veröffentlichungstag der Anmeldung: **18.11.1993**
(21) Anmeldenummer: 93106826.6
(22) Anmeldetag: 27.04.1993
(51) Int. Cl.: B24B 41/04, G01M 1/36

(54) **Verfahren zum Steuern einer Schleifmaschine**

(30) Priorität: 13.05.1992 DE 4215723
(71) Anmelder: WALTER DITTEL GmbH, W-8910 Landsberg/Lech 1 (DE)
(72) Erfinder: Lotze, Walter, D-86899 Landsberg (DE); Müller-Gall, Reinhard, D-86938 Schondorf (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(57) **Zusammenfassung**

Die Erfindung betrifft ein Verfahren und eine Vorrichtung zum Steuern einer Schleifmaschine mit einer drehbaren Schleifscheibe (10). Dabei wird während einer Bearbeitung von Werkstücken (12) oder einem Abrichten der Schleifscheibe (10) der durch den Eingriff der drehbaren Schleifscheibe (10) mit dem Werkstück (12) bzw. mit der Abrichteinrichtung (14) entstehende Körperschall mittels eines Körperschallfühlers (30) erfaßt und in ein Körperschallsignal umgewandelt, um die Bearbeitung bzw. das Abrichten zu steuern und um Bearbeitungspausen zu ermitteln. Die Bearbeitung bzw. das Abrichten wird unterbrochen, wenn das Körperschallsignal einen vorgebbaren Grenzwert übersteigt. In den Bearbeitungspausen oder bei einer Unterbrechung der Bearbeitung bzw. des Abrichtens wird ein Unwuchtsignal, das von einem Schwingungsaufnehmer (22) gebildet wird, in einem Grenzwertschalter (46) mit einem vorgebbaren Grenzwert verglichen. Übersteigt dabei das Unwuchtsignal den vorgegebenen Grenzwert, so wird die weitere Bearbeitung bzw. das weitere Abrichten so lange unterbunden bis ein Auswuchten der Schleifscheibe (10) mittels von einer Meß- und Steuerschaltung (26) gesteuerten Auswuchteinheit (20) im wesentlichen abgeschlossen ist. Nach der erfolgreichen Beendigung des Auswuchtens wird dann die weitere Bearbeitung oder ggf. das weitere Abrichten freigegeben.

## Beschreibung

Die Erfindung betrifft ein Verfahren und eine Vorrichtung zum Steuern einer Schleifmaschine mit einer drehbaren Schleifscheibe.

Bei einer bekannten Schleifmaschine (DE 40 07 838 A1) ist an dem freien Ende einer eine Schleifscheibe tragenden Welle ein Körperschallfuhler angeordnet, der die Körperschallschwingungen, die bei der Berührung der drehenden Schleifscheibe mit einem Werkstück oder mit einer Abrichteinrichtung erzeugt werden, in elektrische Körperschallsignale wandelt und an eine erste, mit der Welle drehende Ringspule eines Übertragungstransformators anlegt. Eine zweite Ringspule des Übertragungstransformators ist der ersten gegenüberliegend feststehend angeordnet und mit einer Auswerteeinheit elektrisch verbunden.

Aufgrund dieser bekannten Anordnung des Körperschallfühlers wird der Körperschall weitgehend störungsfrei erfaßt und die daraus abgeleiteten Körperschallsignale können zur Steuerung der Schleifmaschine, insbesondere zur Steuerung des Zustellens eines Werkstücks bzw. der Abrichteinrichtung verwendet werden.

Bei einer bekannten Auswuchtvorrichtung (DE 37 20 746 C2) für die Schleifscheibe einer Schleifmaschine sind innerhalb eines Hohlraums in der die Schleifscheibe tragenden Welle mittels Elektromotoren verdrehbare Auswuchtmassen exzentrisch angeordnet, die zum Ausgleich einer gemessenen Unwucht der Schleifscheibe dienen. Um von einer feststehenden Steuervorrichtung den Elektromotoren die zum Verdrehen der Auswuchtmassen erforderliche Energie sowie entsprechende Steuersignale verschleißfrei zuführen zu können, ist ein Übertragungstransformator vorgesehen, dessen erste Spule an der Stirnseite der Welle der Schleifscheibe angeordnet ist und mit dieser dreht und dessen zweite Spule der ersten gegenüberliegend feststehend angeordnet ist.

Ausgehend von diesem Stand der Technik liegt der Erfindung die Aufgabe zugrunde, ein weiteres Verfahren und eine weitere Vorrichtung zum Steuern einer Schleifmaschine zu schaffen, die die wesentlichen Parameter so überwachen und steuern, daß einerseits eine allen praktischen Bedürfnissen entsprechende Überwachungssicherheit geschaffen wird, andererseits aber ein übermäßiger Aufwand für die Signaltrennung vermieden wird.

Erfindungsgemäß wird diese Aufgabe durch ein Verfahren nach Anspruch 1 bzw. eine Vorrichtung nach Anspruch 2 gelöst.

Die Erfindung nutzt also die stets vorhandenen Bearbeitungspausen für Unwuchtmessung und ggf. -beseitigung aus, so daß eine nur mit hohem Aufwand durchführbare Trennung der Körperschall- und Unwuchtsignale vermieden wird, ohne daß die Überwachungssicherheit beeinträchtigt wird, denn Unwuchten entstehen so langsam, daß sie auch bei Unwuchtmessung nur in den Bearbeitungspausen sicher erfaßt werden, während beim Auswuchten die weitere Bearbeitung unterbunden wird.

Um Bearbeitungspausen, in denen eine Unwucht der Schleifscheibe einwandfrei ermittelt werden kann, sicher festzustellen, wird der Körperschall erfaßt, der bei einer Bearbeitung von Werkstücken oder beim Abrichten der Schleifscheibe durch den Eingriff der Schleifscheibe mit dem Werkstück bzw. mit der Abrichteinrichtung erzeugt wird, erfaßt, so daß das Fehlen eines Körperschallsignals eine Bearbeitungspause anzeigt. In einer derartigen Bearbeitungspause kann dann die Umwucht der Schleifscheibe bestimmt und ggf. ein Auswuchtvorgang eingeleitet werden. Während des Auswuchtens wird dann eine weitere Bearbeitung des Werkstücks bzw. ein weiteres Abrichten der Schleifscheibe gesperrt, so daß ein fehlerhaftes Auswuchten durch ein zu früh einsetzendes Bearbeiten oder Abrichten während des Auswuchtens sicher verhindert wird.

Mittels des erfindungsgemäßen Verfahrens nach Anspruch 1, das in besonders vorteilhafter Weise mit einer Vorrichtung nach Anspruch 2 durchführbar ist, läßt sich eine einwandfreie Bearbeitung von Werkstücken sicherstellen, da in jeder Bearbeitungspause festgestellt wird, ob die Schleifscheibe noch den für eine einwandfreie Bearbeitung von Werkstücken erforderlichen Gleichlauf besitzt.

Ferner läßt sich durch die ständige Überwachung des Körperschallsignals während einer Bearbeitung feststellen, ob die Bearbeitung den vorgegebenen Anforderungen entspricht, oder ob irgendwelche Störungen auftreten. Bei Bearbeitungsstörungen, die eine Unterbrechung im Arbeitsablauf, also eine Unterbrechung des Schleifens von Werkstücken, bewirken, findet dann sofort eine Überprüfung der Unwucht und eventuell anschließend ein Auswuchten statt. Eventuell erforderliche Ausgleichsmaßnahmen, während der die weitere Bearbeitung gesperrt ist, können also ohne großen Zeitverlust durchgeführt werden. Nach dem Auswuchten wird dann die Bearbeitung wieder fortgesetzt, wobei der Körperschall überwacht wird.

Durch die Erfindung wird es demnach ermöglicht, ohne große Zeitverluste durch Unterbrechungen der Bearbeitungen stets ein einwandfreies Bearbeitungsergebnis zu erzielen.

Durch die Verwendung eines einfachen Umschalters, wie ihn die vorteilhafte Weiterbildung nach Anspruch 2 aufweist, läßt sich das Auswucht-Freigabesignal in besonders einfacher Weise an die das Auswuchten steuernde Meß- und Steuerschaltung anlegen, wobei gleichzeitig verhindert werden kann, das ein möglicherweise austretendes Ausgangssignal der Körperschallauswerteeinheit irgendwelche Störungen des Auswuchten bewirkt.

Eine vorteilhafte Weiterbildung der Erfindung ist in Anspruch 4 beschrieben.
Um eine Unterbrechung eines Bearbeitungsvorgangs möglichst einfach zu bewirken, wenn irgendwelche Unregelmäßigkeiten beim Schleifen festgestellt werden, sind die Ausführungsbeispiele nach Anspruch 5 und 6 vorgesehen.

Die Ausgestaltung der Erfindung nach Anspruch 7 dient dazu, eine ein zulässiges Maß überschreitende Unwucht sicher zu erfassen.

Um auch bei Schleifmaschinen, an denen nur ein Wellenende zur Erfassung des Körperschalls und zum Auswuchten zur Verfügung steht, das erfindungsgemäße Verfahren durchführen zu können, sind die besonders bevorzugten Weiterbildungen der Erfindung nach den Ansprüchen 8 bis 10 vorgesehen.

Eine vorteilhafte Ausgestaltung dieser Weiterbildung ist im Anspruch 11 beschrieben.

Die erfindungsgemäßen Ausgestaltungen nach Anspruch 12 und 13 ermöglichen eine verschleißfreie Übertragung von Meß- und Steuersignalen zwischen den feststehend und den drehend angeordneten Teilen der erfindungsgemäßen Vorrichtung. Dabei wird eine gegenseitige Beeinflussung der konzentrisch zueinander angeordneten Übertragungstransformatoren für das Körperschallsignal und für die zum Auswuchten benötigte Energie und die erforderlichen Steuersignale dadurch verhindert, daß während einer Bearbeitung kein Auswuchten vorgenommen werden kann, so daß während des Bearbeitens keine Signale über den der Auswuchteinheit zugeordneten Übertragungstransformator übertragen werden, die die Übertragung der Körperschallsignale stören könnten.

Während eines Auswuchtvorgangs tritt praktisch kein Körperschall auf, so daß dann auch keine Körperschallsignale über den entsprechenden Übertragungstransformator übertragen werden.
Die beiden Übertragungstransformatoren werden also jeweils unabhängig voneinander zu unterschiedlichen Zeiten benutzt.

Die Erfindung wird im folgenden beispielsweise anhand der Zeichnung näher beschrieben; in dieser zeigt:
- Fig. 1: eine teilweise geschnittene Seitenansicht einer Schleifscheibe mit einer Vorrichtung zum Steuern der Schleifmaschine und
- Fig. 2: eine geschnittene Seitenansicht einer am Schleifscheibenwellenende anzuordnenden Signalübertragungseinheit.

In den beiden Figuren der Zeichnung sind einander entsprechende Bauteile mit gleichen Bezugszeichen bezeichnet.

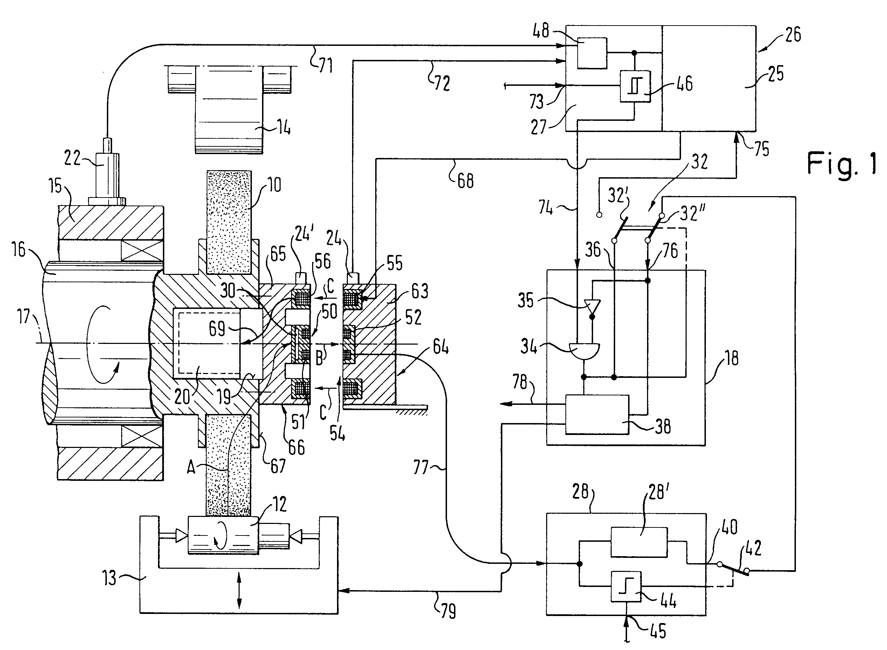

Figur 1 zeigt eine Schleifscheibe 10 die auf einer Welle 16 angeordnet ist. Die Welle 16 ist in einem Maschinengehäuse 15 drehbar gelagert. Mit der Schleifscheibe 10 ist ein Werkstück 12 in Eingriff bringbar, das an einer zumindest radial zur Schleifscheibe 10 verschiebbaren Werkstückhalte- und -zustellvorrichtung 13 angeordnet ist. Zusätzlich ist die Schleifscheibe 10 in nicht näher dargestellter Weise mit einer Abrichteinrichtung 14 in Eingriff bringbar.

In einem stirnseitigen Hohlraum 19 der Welle 16 ist eine Auswuchteinheit 20 eingesetzt, die beispielsweise, wie in der DE 37 20 746 C2 näher beschrieben, exzentrisch zur Wellenachse 17 verdrehbar angeordnete Auswuchtmassen aufweist, die von Elektromotoren verstellbar sind.

Die Auswuchteinheit 20 wird von einer Meß- und Steuerschaltung 26 beaufschlagt, die einen Energieversorgungs- und Steuerschaltkreis 25 sowie einen Eingangskreis 27 aufweist. Die Übertragung der für den Betrieb der Auswuchteinheit 20 erforderlichen Energie und Steuersignale erfolgt über einen Übertragungstransformator 54 dessen erste Spule 55 feststehend in einem Gehäuse 63 einer Sende-Empfangs-Einheit 64 angeordnet ist. Die zweite Spule 56 des Übertragungstransformators 54 ist in einem Gehäuse 65 eines Empfangs-Sende-Kopfes 66 untergebracht. Der Empfangs-Sende-Kopf 66 ist in geeigneter Weise, z.B. mittels Schrauben, an einer freien Stirnfläche 67 der Welle 16 befestigt.

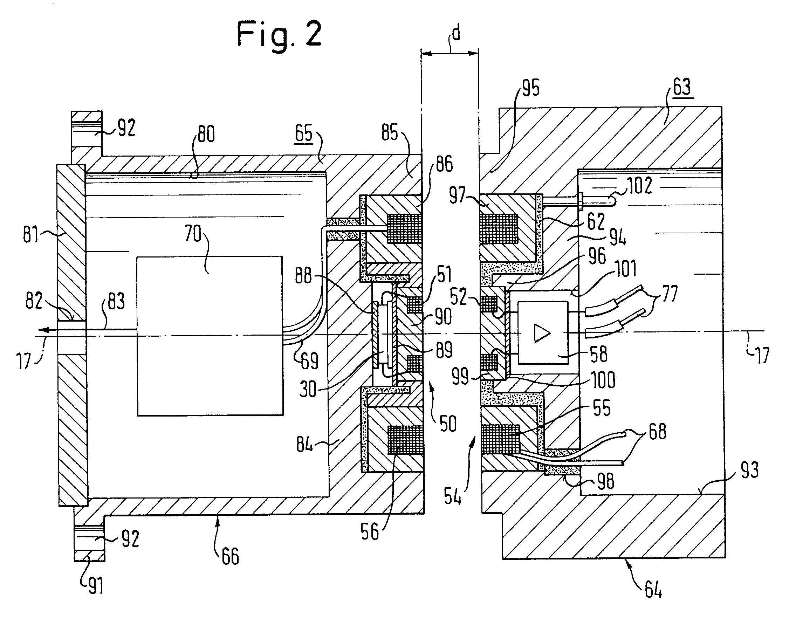

Die erste Spule 55 des Übertragungstransformators 54 ist dabei über eine zweiadrige Leitung 68 mit dem Energieversorgungs- und Steuerschaltkreis 25 verbunden, während die zweite Spule 56 über eine Leitung 69 mit einer Motorsteuerschaltung 70 (Figur 2) verbunden ist.

Der die Auswuchteinheit 20 steuernden Meß- und Steuerschaltung 26 sind ein am Maschinerigehäuse 15 angeordneter Schwingungsaufnehmer 22 und ein Drehstellungsfühler 24 zugeordnet, die über Signalleitungen 71 bzw. 72 mit dem Eingangsschaltkreis 27 verbunden sind. Der Drehstellungsfühler 24 ist dabei an der feststehenden Sende-Empfangs-Einheit 64 angeordnet und wirkt mit einem Impulsgeber 24' zusammen, der an dem mit der Schleifscheibe 10 drehenden Empfangs-Sende-Kopf 66 befestigt ist. Die Drehstellungsfühlereinheit 24, 24' kann dabei beispielsweise als Lichtschranke, induktiver Fühler oder dergleichen ausgebildet sein.

Ein vom Schwingungsaufnehmer 22 über die Signalleitung 71 an den Eingangsschaltkreis 27 der Meß- und Steuerschaltung 26 geliefertes Unwuchtsignal wird über eine Filterschaltung 48 dem Energieversorgungs- und Steuerschaltkreis 25 sowie einem Grenzwertschalter 46 zugeführt, dessen Grenzwert über einen Eingang 73 einstellbar ist. Am Ausgang des Grenzwertschalters 46 liegt ein Unwuchterfassungssignal vor, wenn das Umwuchtsignal den voreingestellten Grenzwert überschreitet. Dieses Unwuchterfassungssignal wird über eine Signalleitung 74 an eine Sperr- und Freigabeschaltung 32, 34 einer Maschinensteuereinheit 18 angelegt, um während Bearbeitungs- oder Abrichtpausen, in denen die Schleifscheibe 10 frei dreht, anzuzeigen, ob ein Auswuchten erforderlich ist oder nicht.

Die Sperr- und Freigabeschaltung umfaßt beispielsweise ein UND-Gatter 34 sowie einen Umschalter 32 mit zwei gemeinsam miteinander bewegbaren Kontakten 32', 32'' von denen der eine 32' den Ausgang des UND-Gatters 34 mit einem Freigabeeingang 75 der Meß- und Steuerschaltung 26 verbinden kann. Der zweite bewegliche Kontakt 32'' des Umschalters 32 verbindet einen Ausgang 40 einer Körperschallauswerteeinheit 28 mit einem Signaleingang 76 der Maschinensteuereinheit 18.

Zur Erfassung des beim Schleifen oder beim Abrichten auftretenden Körperschalls ist ein Körperschallfühler 30 am Empfangs-Sende-Kopf 66 vorgesehen, wobei der Körperschallfühler 30 z.B. als Piezoelement ausgebildet sein kann, wie es in der DE 40 07 838 A1 beschrieben ist.

Der Körperschallfühler 30 ist mit einer ersten Spule 51 eines Übertragungstransformators 50 verbunden, dessen zweite Spule 52 über einen Vorverstärker 58 (Figur 2) und eine Signalleitung 77 mit der Körperschallauswerteeinheit 28 verbunden ist. In der Körperschallauswerteeinheit 28 wird das Körperschallsignal zum einen über einen Körperschallauswerteschaltkreis 28' an den Ausgang 40 und zum anderen an einen Grenzwertschalter 44 angelegt, dessen Ausgangssignal einen Unterbrecherschalter 42 beaufschlagt, der dem Ausgang 40 nachgeschaltet ist. Ein die Schaltschwelle des Grenzwertschalters 44 festlegender Grenzwert kann über einen Eingang 45 eingegeben werden.

In der Maschinensteuereinheit wird das über den beweglichen Kontakt 32'' des Umschalters 32 am Eingang 76 anliegende Ausgangssignal der Körperschallauswerteeinheit 28 über einen Inverter 35 an das UND-Gatter 34 und direkt an eine Bearbeitungssteuerschaltung 38 angelegt. Die Bearbeitungssteuerschaltung 38 beaufschlagt zum einen in nicht näher dargestellter Weise den Antrieb für die Schleifscheibe 10 über eine Leitung 78 und zum anderen die Werkstückhalte- und -zustellvorrichtung über eine Leitung 79, um den Zustellweg für das jeweilige Werkstück 12 und/oder die Zustellgeschwindigkeit zu steuern und um damit den jeweiligen Bearbeitungsvorgang einzuleiten bzw. zu beenden.

Im folgenden wird anhand von Figur 2 der Aufbau der Sende-Empfangs-Einheit 64 und des Empfangs-Sende-Kopfes 66 näher erläutert.

Das Gehäuse 66, das im wesentlichen kreiszylindrisch ist, besitzt ein zur die Schleifscheibe 10 tragenden Welle 16 hin offenen Hohlraum 80 zur Aufnahme der Motorsteuerschaltung 70. An seinem offenen Ende ist der Hohlraum 80 mittels einer Platte 81 abgedeckt, die eine zentrale Durchgangsöffnung 82 aufweist, durch die eine Kabelverbindung 83 zu den Motoren der Auswuchteinheit 20 führt. An dem von der Welle 10 abgewandten Ende ist der Hohlraum 80 durch eine Wand 84 verschlossen, an die sich ein axial gerichteter Ringflansch 85 anschließt. In die von der Wand 84 und dem Ringflansch 85 begrenzte Ausnehmung ist ein ringförmiger Schalenkern 86 konzentrisch zur Gehäuseachse eingesetzt, in den die zweite Spule 56 des Übertragungstransformators 54 für die Motorenergie und -steuersignale eingesetzt ist. Die Leitung 69 von der zweiten Spule 56 zur Motorsteuerschaltung 70 ist dabei durch eine Bohrung 87 in der Wand 84 geführt und in dieser zweckmäßigerweise mit einem geeigneten Material eingegossen.

Radial innerhalb des ringförmigen Schalenkerns 86 ist der Körperschallfühler 30 zentriert zur Gehäuseachse die mit der Wellenachse 17 fluchtend ausgerichtet ist, an der Wand 84 befestigt. Falls als Körperschallfühler 30 ein Piezoelement Verwendung findet, kann dieses über einen Isolator 88 an der Wand 84 befestigt sein. Zwischen dem Schalenkern 86 und der Wand 84 ist eine Abschirmeinrichtung 60 vorgesehen, die sich radial innerhalb des Schalenkerns 86 axial an diesem entlang erstreckt und die gleichzeitig als Halteeinrichtung für eine Tragplatte 89 dient, an der ein Schalenkern 90 für die erste Spule 51 des Übertragungstransformators 50 für die Körper-Schallsignale angebracht. Die Spule 51 ist ringförmig in dem Schalenkern 90 aufgenommen und konzentrisch zur Gehäuseachse angeordnet.

An dem der Welle 16 zugewandten Ende des Gehäuses 65 ist an diesem ein sich radial nach außen erstreckender Flansch 91 vorgesehen, der Bohrungen 92 aufweist, so daß das Gehäuse 65 mit der Welle 16 verschraubbar ist.

Dem mit der Welle drehenden Empfangs-Sende-Kopf 66 liegt die feststehend angeordnete Sende-Empfangs-Einheit 64 gegenüber, wobei zwischen den einander gegenüberliegenden Stirnflächen der Gehäuse 65 bzw. 63 ein Abstand d von ca. 1 mm vorgesehen ist, wodurch der Luftspalt der Übertragungstransformatoren 50, 54 festgelegt ist.

Das Gehäuse 63, das im wesentlichen kreiszylindrisch ist, weist einen in Figur 2 nach rechts hin offenen, jedoch abdeckbaren Hohlraum 93 auf, in dem die Anschlüsse für die Leitungen 77 und 68 untergebracht sind. Auf der dem Empfangs-Sende-Kopf 66 zugewandten Seite ist der Hohlraum 93 durch eine ringförmige Wand 94 begrenzt, an die sich radial außenliegend ein axial gerichteter Ringflansch 95 und ein radial innenliegender, sich ebenfalls axial in Richtung auf den Empfangs-Sende-Kopf 66 hin erstreckender Ringflansch 96 anschließt.

In den vom äußeren Ringflansch 95, von der Wand 94 und vom inneren Ringflansch 96 begrenzten Ausnehmung ist ein ringförmiger Schalenkern 97 des Übertragungstransformators 54 eingesetzt, der dessen erste Spule 55 aufnimmt. Die von der ersten Spule 55 zur Meß- und Steuerschaltung 26 führenden Leitungen 68 sind durch eine Bohrung 98 in der Wand 94 hindurchgeführt und in dieser zweckmäßigerweise mit einem geeigneten Material vergossen. Ein Schalenkern 99 zur Aufnahme der zweiten Spule 52 des Übertragungstransformators 50 für Körperschallsignale ist in eine innenliegende Ringstufe 100 im inneren Ringflansch 96 aufgenommen. In einen von der Ringwand 94 und dem inneren Ringflansch 96 begrenzten Hohlraum 101 ist der Vorverstärker 58 angeordnet.

Zwischen dem Schalenkern 97 des radial außenliegenden Übertragungstransformators 54 und der Ringwand 94, dem inneren Ringflansch 96 sowie dem Schalenkern 99 des innenliegenden Übertragungstransformators 50 ist eine Abschirmeinrichtung 62 angeordnet, die über einen Stift 102, der sich durch eine geeignete Bohrung in der Ringwand 94 erstreckt, an Masse angelegt werden kann.

Anstelle der beschriebenen Anordnung der Übertragungstransformatoren 50 und 54 können diese auch so gegeneinander vertauscht angeordnet sein, daß der radial außenliegende Übertragungstransformator die Körperschallsignale und der radial innenliegende Übertragungstransformator die zum Auswuchten erforderliche Energie und die dafür benötigten Steuersignale überträgt.

Die Durchführung des erfindungsgemäßen Verfahrens mit der anhand von Figur 1 und 2 beschriebenen Vorrichtung wird im folgenden beschrieben:
Beim Betrieb der Schleifmaschine wird, sobald die Schleifscheibe 10 ausgewuchtet ist, von der Bearbeitungssteuerschaltung 38 über die Signalleitung 79 ein entsprechendes Signal an die Werkstückhalte- und -zustellvorrichtung 13 abgegeben, so daß diese die Zustellung des Werkstücks 12 gegen die Schleifscheibe 10 bewirkt. Sobald das Werkstück 12 dabei in Eingriff mit der Schleifscheibe 10 gelangt, wird durch diesen Eingriff Körperschall erzeugt, der - wie durch die Linie A in Figur 1 angedeutet - vom Erzeugungsbereich über die Schleifscheibe 10, die Welle 16 und das Gehäuse 65 des Empfangs-Sende-Kopfes 66 zum Körperschallfühler 30 geleitet wird. Dieser erfaßt den Körperschall und erzeugt ein Körperschallsignal, das an die erste Spule 51 des ersten Übertragungstransformators 50 angelegt wird. Dieses Körperschallsignal wird - wie durch den Pfeil B angedeutet - von der ersten auf die zweite Spule 51 bzw. 52 des Übertragungstransformators gesendet und von diesem über den Vorverstärker 58 und die Leitung 77 an die Körperschallauswerteeinheit 28 angelegt.

Von dieser gelangt das Körperschallsignal über den geschlossenen Unterbrecherschalter 42 und den beweglichen Kontakt 32'' des Umschalter 32, der sich in der in Figur 1 gezeigten Stellung befindet, zum Eingang 76 der Maschinensteuereinheit 18. Über den Inverter 35 wird das Körperschallsignal in ein Signal logisch Null gewandelt, das am UND-Gatter 34 anliegt, so daß dieses gesperrt bleibt. Gleichzeitig wird das Körperschallsignal an die Bearbeitungssteuerschaltung 38 geführt, die in Abhängigkeit von diesem Signal eine weitere Zustellbewegung bewirkt oder die Zustellbewegung anhält, so daß der gewünschte Eingriff zwischen Schleifscheibe 10 und Werkstück 12, der für die durchzuführende Bearbeitung erforderlich ist, sichergestellt wird.

Sobald die Bearbeitung des Werkstücks 12 beendet ist, wird kein zu erfassender Körperschall mehr erzeugt und das am Eingang 76 der Maschinensteuereinheit 18 anliegende Körperschallsignal wird zu Null, so daß über den Inverter 35 am UND-Gatter 34 ein Signal logisch 1 anliegt.

Wird in einer derartigen Bearbeitungspause vom Schwingungsaufnehmer 22 ein Unwuchtsignal erfaßt, das größer ist als ein vorgegebener Grenzwert, auf den der Grenzwertschalter 46 eingestellt ist, so wird vom Grenzwertschalter 46 ein Unwuchterfassungssignal über die Leitung 74 an den zweiten Eingang des UND-Gatter 34 angelegt, welches logisch 1 entspricht. Damit tritt am Ausgang des UND-Gatter 34 ein Signal logisch 1 auf, welches als Sperrsignal an die Bearbeitungssteuerschaltung 38 angelegt wird, um einen weiteren Bearbeitungsvorgang zu unterbinden. Gleichzeitig bewirkt das Ausgangssignal logisch 1 des UND-Gatters 34, daß der Umschalter 32 in seine in Figur 1 nicht gezeigte Stellung umgeschaltet wird, so daß das Ausgangssignal des UND-Gatter 34 über den Ausgang 36 der Maschinensteuereinheit 18 und den beweglichen Kontakt 32' des Umschalters 32 an den Freigabeeingang 75 der das Auswuchten steuernden Meß- und Steuerschaltung 26 angelegt wird.

Durch das Umschalten des Umschalters 32 liegt am Eingang 76 der Maschinensteuereinheit 18 ständig ein Nullsignal an, so daß das UND-Gatter 34 so lange ein als Auswucht-Freigabe- und Bearbeitungs-Sperrsignal dienendes Signal logisch 1 liefert, bis nach einem erfolgreichen Auswuchten der Schleifscheibe 10 das vom Schwingungsaufnehmer 22 gelieferte Unwuchtsignal unter einen unteren, vorbestimmten Grenzwert des Grenzwertschalters 46 absinkt und dieser ein logisch Null entsprechendes Unwuchterfassungssignal erzeugt, das die erfolgreiche Beendigung des Auswuchtvorgangs anzeigt.

Damit wird auch der Ausgang des UND-Gatters 34 wieder logisch Null, wodurch der Umschalter 32 in die in Figur 1 gezeigte Stellung zurückgeschaltet wird und die Bearbeitungssteuerschaltung 38 für eine weitere Bearbeitung freigegeben wird.

Treten während der Bearbeitung eines Werkstücks 12 irgendwelche Unregelmäßigkeiten auf, die dazu führen, daß das Körperschallsignal einen vorgegebenen Grenzwert übersteigt, so liefert der Grenzwertschalter 44 der Körperschallauswerteeinheit 28 ein Ausgangssignal, das den Unterbrecherschalter 42 öffnet. Damit liegt am Eingang 76 der Maschinensteuereinheit 76 ein logisch Null entsprechendes Signal an, das einerseits das UND-Gatter 34 für eine ggf. erforderliche Durchführung eines Auswuchtvorgangs freigibt und das über die Bearbeitungssteuerschaltung 38 ein Wegfahren des Werkstücks 12 von der Schleifscheibe 10 bewirkt.

Nach dieser Unterbrechung des Bearbeitungsvorgangs liegt dann ein der tatsächlichen Unwucht der Schleifscheibe 10 entsprechendes Unwuchtsignal über die Filterschaltung 48 am Grenzwertschalter 46 an. Wird dabei festgestellt, daß die Unwucht während des Bearbeitens soweit angestiegen ist, daß sie den zulässigen Grenzwert übersteigt, so wird wie oben beschrieben ein Auswuchtvorgang eingeleitet. Anderenfalls werden entsprechende Korrektur- oder Abschaltsignale bereitgestellt, um eine weitere korrekte Bearbeitung des Werkstücks oder anderer Werkstücke zu ermöglichen.

Während des Auswuchtens wird die dafür von der Auswuchteinheit 20 benötigte Energie sowie entsprechende Steuersignale über den äußeren, zweiten Übertragungstransformator in Richtung der Pfeile C übertragen. Da während des Auswuchtens praktisch keine Körperschallsignale erfaßt werden, findet dabei auch keine Signalübertragung am ersten Übertragungstransformator 50 statt, so daß praktisch auch keine Störung der Energie- und Signalübertragung in Richtung der Pfeile C durch Übersprechen auftreten kann. Selbst wenn geringfügige Körperschallsignale vorliegen sollten, so wird das Übersprechen zwischen den beiden Übertragungstransformatoren durch die Abschirmeinrichtungen 60, 62 wirksam verhindert.

Umgekehrt wird während einer Bearbeitung ein Auswuchten und damit auch eine Energien und Signalübertragung in Richtung der Pfeile C über den äußeren, zweiten Übertragungstransformator 54 unterbunden, so daß auch keine Störungen der Übertragung der Körperschallsignale in Richtung des Pfeils B über den ersten, inneren Übertragungstransformator 50 auftreten können.

## Patentansprüche

1. Verfahren zum Steuern einer Schleifmaschine mit einer drehbaren Schleifscheibe (10),
- bei dem während einer Bearbeitung von Werkstücken (12) oder einem Abrichten der Schleifscheibe (10) der durch den Eingriff der drehenden Schleifscheibe (10) mit dem Werkstück (12) bzw. mit einer Abrichteinrichtung (14) entstehende Körperschall erfaßt und in ein Körperschallsignal umgewandelt wird, um die Bearbeitung bzw. das Abrichten zu steuern und um Bearbeitungspausen zu ermitteln,
- bei dem die Bearbeitung bzw. das Abrichten unterbrochen wird, wenn das Körperschallsignal einen vorgebbaren Grenzwert übersteigt,
- bei dem in den Bearbeitungspausen und bei einer Unterbrechung der Bearbeitung bzw. des Abrichtens ein Unwuchtsignal mit einem vorgebbaren Grenzwert verglichen wird,
- bei dem, wenn das Unwuchtsignal den Grenzwert erreicht und/oder überschreitet, ein Auswuchten der Schleifscheibe (10) durchgeführt und die weitere Bearbeitung bzw. das weitere Anrichten so lange unterbunden wird, bis der Auswuchtvorgang zumindest im wesentlichen abgeschlossen ist, und
- bei dem nach Beendigung des Auswuchtens die Bearbeitung oder ggf. das weitere Anrichten wieder freigegeben wird.

2. Vorrichtung zum Steuern einer Schleifmaschine, die eine drehfest auf einer antreibbaren Welle (16) gelagerte Schleifscheibe (10) aufweist, insbesondere zur Durchführung des Verfahrens nach Anspruch 1,
mit einer Maschinensteuereinheit (18),
mit einer der Schleifscheibe (10) zugeordneten Auswuchteinheit (20), die von einer von einem Schwingungsaufnehmer (22) und einem Drehstellungsfühler (24) beaufschlagten Meß- und Steuerschaltung (26) gesteuert wird,
mit einer Körperschallauswerteeinheit (28) der von einem Körperschallfühler (30) ein Körperschallsignal zugeführt wird und deren Ausgangssignal an die Maschinensteuereinheit (18) anlegbar ist, wobei der Maschinensteuereinheit (18) eine Sperr- und Freigabeschaltung (32, 34) zugeordnet ist, die in Abhängigkeit vom Ausgangssignal der Körperschallauswerteeinheit (28) und von einem Umwuchterfassungssignal, das von der Meß- und Steuerschaltung (26) zugeführt wird, ein Auswucht-Freigabesignal an die Meß- und Steuerschaltung (26) liefert und gleichzeitig ein Sperrsignal erzeugt, das eine weitere Bearbeitung von Werkstücken während des Auswuchtens verhindert.

3. Vorrichtung nach Anspruch 2,
wobei die Sperr- und Freigabeschaltung einen Umschalter (32) aufweist, der in seiner ersten Stellung das Ausgangssignal der Körperschallauswerteeinheit (28) an die Maschinensteuereinheit (18) anlegt, der in seiner zweiten Stellung einen Ausgang (36) der Maschinensteuereinheit (18) für das Auswucht-Freigabesignal mit der das Auswuchten steuernden Meß- und Steuerschaltung (26) verbindet und der von einem Ausgangssignal der Sperr- und Freigabeschaltung umschaltbar ist.

4. Vorrichtung nach Anspruch 2 oder 3,
wobei ein Ausgangssignal der Sperr- und Freigabeschaltung (32, 34) als Auswucht-Freigabesignal an die das Auswuchten steuernde Meß- und Steuerschaltung (26) und als Sperrsignal an eine Bearbeitungssteuerschaltung (38) der Maschinensteuereinheit (18) angelegt ist.

5. Vorrichtung nach Anspruch 2, 3 oder 4,
wobei einem Ausgang (40) der Körperschallauswerteeinheit ein steuerbarer Unterbrecherschalter (42) zugeordnet ist, der in Abhängigkeit vom Körperschallsignal betätigbar ist.

6. Vorrichtung nach Anspruch 5,
wobei der Unterbrecherschalter (42) vom Körperschallsignal über einen Grenzwertschalter (44) betätigbar ist.

7. Vorrichtung nach Anspruch 2 bis 6,
wobei die das Auswuchten steuernde Meß- und Steuerschaltung (26) einen Grenzwertschalter (46) umfaßt, dem das Unwuchtsignal vorzugsweise über eine Filterschaltung (48) zugeführt ist und dessen Ausgangssignal als Unwuchterfassungssignal an die Maschinensteuereinheit (18) angelegt ist.

8. Vorrichtung nach Anspruch 2 bis 7,
wobei der Körperschallfühler (30) an einem der Schleifscheibe (10) zugeordneten freien Ende der die Schleifscheibe (10) tragenden Welle zusammen mit einer ersten Spule (51) eines Übertragungstransformators (50) für Körperschallsignale konzentrisch zur Wellenachse (17) angeordnet sind, wobei an diesem Ende der Welle (16) ein erstes Übertragungselement (55) einer Übertragungseinheit (54) angeordnet ist, das der Auswuchteinheit (20) zugeordnet ist, und wobei eine zweite Spule (52) des Übertragungstransformators (50) für Körperschallsignale sowie ein der das Auswuchten steuernden Meß- und Steuerschaltung (26) zugeordnetes, zweites Übertragungselement (56) der Übertragungseinheit (54) der ersten Spule (51) bzw. dem ersten Übertragungselement (55) gegenüberliegend feststehend angeordnet sind.

9. Vorrichtung nach Anspruch 8,
wobei die Übertragungselemente (55, 56) der Übertragungseinheit (54) konzentrisch zur Wellenachse (17) im wesentlichen ringförmig angeordnet sind.

10. Vorrichtung nach Anspruch 8 oder 9,
wobei die Spulen (51, 52) des Übertragungstransformators (50) für Körperschallsignale jeweils innerhalb der im wesentlichen ringförmigen Übertragungselemente (55, 56) der Übertragungseinheit (54) angeordnet sind.

11. Vorrichtung nach Anspruch 8 bis 10,
wobei die feststehende zweite Spule (52) an einen Vorverstärker (58) angeschlossen ist, dessen Ausgangssignal als Körperschallsignal an die Körperschallauswerteeinheit (28) angelegt ist.

12. Vorrichtung nach Anspruch 8 bis 11,
wobei die Auswuchteinheit (20) zum Ausgleich einer gemessenen Unwucht vorzugsweise mittels Elektromotoren verdrehbare, exentrisch zur Wellenachse (17) angeordnete Auswuchtmassen umfaßt, wobei als Übertragungselemente die ringförmigen Spulen (55, 56) eines zweiten Übertragungstransformators (54) vorgesehen sind, der die zum Verdrehen der Auswuchtmassen benötigte Energie sowie die erforderlichen Steuersignale von der Meß- und Steuerschaltung (26) zur Auswuchteinheit (20) überträgt.

13. Vorrichtung nach Anspruch 12,
wobei jeweils zwischen den ersten (51, 55) und den zweiten Spulen (52, 56) der beiden Übertragungstransformatoren (50, 54) eine magnetische Abschirmeinrichtung (60, 62) vorgesehen ist.
